# EUROPEAN PATENT APPLICATION

(11) **EP 4 582 714 A1**
(43) Date of publication of application: **09.07.2025**
(21) Application number: 23860314.6
(22) Date of filing: 29.08.2023
(51) Int. Cl.: F16C 33/78, F16C 19/18, F16J 15/3232

(54) **SEALING STRUCTURE**

(30) Priority: 31.08.2022 JP 2022138233
(71) Applicant: NOK Corporation, Minato-ku Tokyo 105-8585 (JP)
(72) Inventor: NAKAGAWA, Yuki, Fukushima-shi, Fukushima 960-1193 (JP); HIROTA, Kazuki, Fukushima-shi, Fukushima 960-1193 (JP)
(74) Representative: TBK
(86) International application number: PCT/JP2023/031110
(87) International publication number: WO 2024/048552

(57) **Abstract**

A sealing structure capable of improving sealing performance while suppressing complication of a configuration is provided.

A sealing structure (1A) is a sealing structure for achieving sealing between an outer peripheral side member (2) and an inner peripheral side member (3) which are relatively rotatable and between which a rolling element is provided, the sealing structure including an outer seal member (4) that is attached to the outer peripheral side member (2) and has an outer lip portion (grease lip (412) and side lip (413)) that is in sliding contact with the inner peripheral side member (3) or a target object attached to the inner peripheral side member (3); and an inner seal member (5) that is attached to the inner peripheral side member (3), and has an inner lip portion (512) that is in sliding contact with the outer peripheral side member (2) or a target object attached to the outer peripheral side member (2). The grease lip (412) and the side lip (413) are provided closer to a sealing target space than the inner lip portion (512), and the inner seal member (5) is attached to a recess portion (321) formed in the inner peripheral side member (3).

## Description

### Technical Field

The present invention relates to a sealing structure.

### Background Art

In general, as a wheel bearing structure, a structure is known in which a rolling element is provided between an inner ring fixed to a hub wheel and an outer ring disposed on the outer side of the inner ring. In such a bearing structure, it has been proposed to provide a seal member for protection against muddy water (for example, refer to Patent Literature 1). In a wheel bearing device disclosed in Patent Literature 1, a metal ring is attached to a wheel mounting flange of an inner member, and a seal member is joined to the metal ring. The seal member attached to the metal ring is in sliding contact with an outer member on the outer side of a seal, which is mounted on the outer member and is in sliding contact with the metal ring, thereby protecting the seal from muddy water or the like.

### Document List

### Patent Literature

Patent Literature 1: Japanese Patent Application Publication No. 2014-20413

### Summary of Invention

### Technical Problem

However, in the wheel bearing device disclosed in Patent Literature 1, the seal member is attached to an end portion of the metal ring, and the metal ring has to extend from a portion of the outer member serving as a sliding contact target of the seal to a portion where the sealing member is provided, which is likely to increase in size. On the other hand, in a configuration in which the seal is in direct sliding contact with the inner ring without providing the metal ring, it is difficult to provide the seal member, and it is difficult to improve sealing performance.

The present invention has been made in view of the above-described problems, and an object thereof is to provide a sealing structure capable of improving sealing performance while suppressing complication of a configuration.

### Solution to Problem

In order to achieve the object, a sealing structure according to an aspect of the present invention is a sealing structure for achieving sealing between an outer peripheral side member and an inner peripheral side member which are relatively rotatable and between which a rolling element is provided, the sealing structure including an outer seal member that is attached to the outer peripheral side member and has an outer lip portion that is in sliding contact with the inner peripheral side member or a target object attached to the inner peripheral side member; and an inner seal member that is attached to the inner peripheral side member, and has an inner lip portion that is in sliding contact with the outer peripheral side member or a target object attached to the outer peripheral side member, in which the outer lip portion is provided closer to a sealing target space than the inner lip portion, and the inner seal member is attached to a recess portion formed in the inner peripheral side member.

In the sealing structure according to an aspect of the present invention, the inner peripheral side member is rotatable about a predetermined axis, and the inner lip portion is inclined to extend toward an outer peripheral side as approaching the outer peripheral side member in an axis direction.

In the sealing structure according to an aspect of the present invention, the inner lip portion is formed such that a base end portion is more easily deformed than a distal end portion.

In the sealing structure according to an aspect of the present invention, the inner seal member includes an inner elastic body portion including the inner lip portion, and an inner reinforcement portion attached to the inner elastic body portion, the inner reinforcement portion covers the inner elastic body portion from at least an inner peripheral side, and the inner elastic body portion includes an outer peripheral surface portion in contact with an inner surface of the recess portion.

In the sealing structure according to an aspect of the present invention, a slinger with which the inner lip portion is in sliding contact is attached to the outer peripheral side member.

In the sealing structure according to an aspect of the present invention, the outer seal member includes an outer elastic body portion including the outer lip portion, and an outer reinforcement portion attached to the outer elastic body portion, and the slinger is integrally formed with the outer reinforcement portion.

### Effects of Invention

According to a sealing structure of the present invention, it is possible to improve sealing performance while suppressing complication of a configuration.

### Brief Description of Drawings

[Fig. 1] A cross-sectional view of a bearing structure provided with a sealing structure according to a first embodiment of the present invention.
[Fig. 2] A cross-sectional view of the sealing structure according to the first embodiment of the present invention.
[Fig. 3] A cross-sectional view of a sealing structure according to a second embodiment of the present invention.
[Fig. 4] A cross-sectional view of a sealing structure according to a third embodiment of the present invention.
[Fig. 5] A cross-sectional view of a sealing structure according to a fourth embodiment of the present invention.
[Fig. 6] A cross-sectional view of a sealing structure according to a fifth embodiment of the present invention.

### Description of Embodiments

Hereinafter, embodiments of the present invention will be described with reference to the drawings. In second to fifth embodiments, members similar to those in a first embodiment are denoted by the same reference numerals, description thereof is omitted, and differences will be mainly described.

### [First Embodiment]

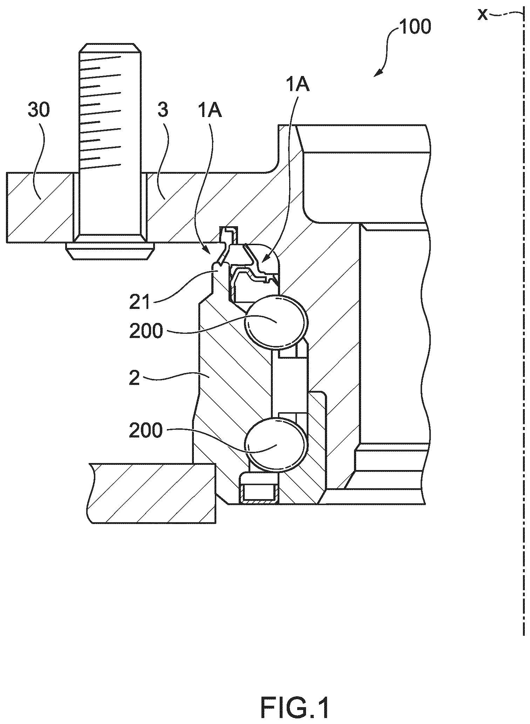

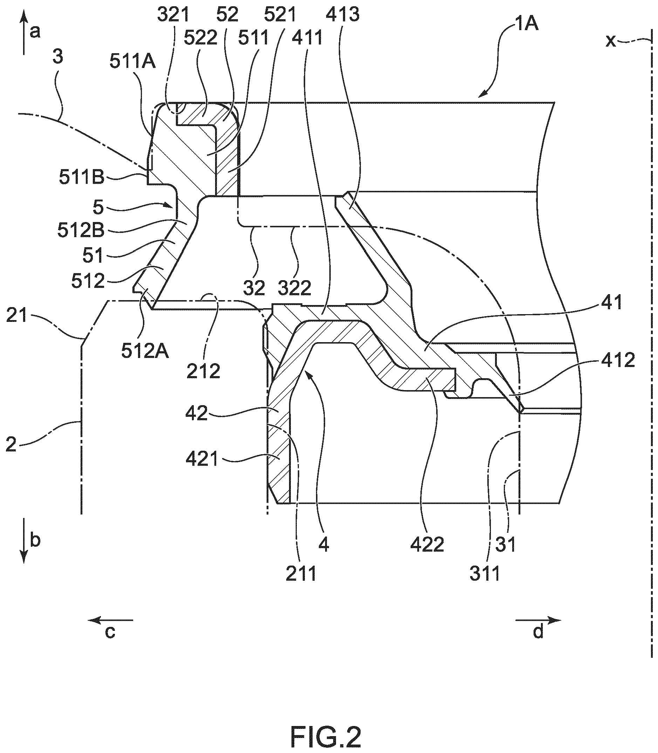

Fig. 1 is a cross-sectional view of a bearing structure 100 provided with a sealing structure 1A according to the first embodiment of the present invention, and Fig. 2 is a cross-sectional view of the sealing structure 1A. In the bearing structure 100 provided with the sealing structure 1A, rolling elements 200 constituting the bearing are provided between an inner peripheral side member 3 to which the wheel is connected and an outer peripheral side member 2 provided on the outer side of the inner peripheral side member 3, and grease is enclosed to smooth the rotation of the rolling elements 200. Although two rolling elements 200 are provided in the illustrated example, the number of rolling elements 200 is not particularly limited. The sealing structure 1A is provided in order to suppress leakage of the enclosed grease and entry of foreign matters into a space (sealing target space) in which the grease is enclosed.

The sealing structure 1A according to the first embodiment of the present invention is a sealing structure for achieving sealing between the outer peripheral side member 2 and the inner peripheral side member 3 which are relatively rotatable and between which the rolling element 200 is provided, the sealing structure 1A including an outer seal member 4 that is attached to the outer peripheral side member 2 and has an outer lip portion (a grease lip 412 and a side lip 413) that is in sliding contact with the inner peripheral side member 3 or a target object attached to the inner peripheral side member 3; and an inner seal member 5 that is attached to the inner peripheral side member 3, and has an inner lip portion 512 that is in sliding contact with the outer peripheral side member 2 or a target object attached to the outer peripheral side member 2. The grease lip 412 and the side lip 413 are provided closer to a sealing target space than the inner lip portion 512, and the inner seal member 5 is attached to a recess portion 321 formed in the inner peripheral side member 3.

Hereinafter, for convenience of description, an arrow a (refer to Fig. 2) direction in an axis x direction of the sealing structure 1A is defined as one side, and an arrow b (refer to Fig. 2) direction in the axis x direction is defined as the other side. In addition, in a direction perpendicular to the axis x (hereinafter, also referred to as a "radial direction"), a direction away from the axis x (an arrow c direction in Fig. 2) is defined as an outer peripheral side, and a direction approaching the axis x (an arrow d direction in Fig. 2) is defined as an inner peripheral side. In the following description, when describing positional relationships and directions of each member, positional relationships and directions in the drawings are merely indicated, and positional relationships and directions when each member is assembled in an actual vehicle or the like are not indicated.

The outer peripheral side member 2 is a so-called outer ring, and is provided so as not to be rotatable with respect to a vehicle or the like. The outer peripheral side member 2 has a tubular portion 21 having a cylindrical shape extending along the axis x direction, in a portion where the outer seal member 4 is provided. The tubular portion 21 is open to the one side in the axis x direction.

The inner peripheral side member 3 is a so-called inner ring provided to be rotatable with respect to the outer peripheral side member 2, and includes a wheel mounting flange 30 to which a wheel is connected. The inner peripheral side member 3 may be divided into a plurality of portions, and the portion illustrated in Fig. 2 may not be directly connected to the wheel. That is, the inner peripheral side member 3 may be any component that is rotated together with the wheel. The inner peripheral side member 3 includes a columnar portion 31 having a columnar shape which extends along the axis x direction and is disposed on the inner peripheral side of the tubular portion 21, and a flange portion 32 that is continuous with an end portion of the columnar portion 31 on the one side in the axis x direction and extends toward the outer peripheral side. The recess portion 321 is formed on a surface 322 of the flange portion 32, which faces the other side in the axis x direction. In addition, a portion of the flange portion 32 where the recess portion 321 is formed extends along a surface orthogonal to the axis x direction, and is particularly a portion on the outer peripheral side of such a plane. In addition, a position where the recess portion 321 is formed is a position facing an end face 212 of the outer peripheral side member 2 in the axis x direction.

An inner peripheral surface 211 of the tubular portion 21 and an outer peripheral surface 311 of the columnar portion 31 are disposed with a gap therebetween, and in this gap, rolling elements are provided and grease is enclosed. That is, a space between the inner peripheral surface 211 and the outer peripheral surface 311 is a sealing target space. In addition, a direction from the other side to the one side in the axis x direction is a direction from the sealing target space side to the atmosphere side, and a direction from the inner peripheral side to the outer peripheral side is a direction from the sealing target space side to the atmosphere side.

The outer seal member 4 includes an outer elastic body portion 41, and an outer reinforcement portion 42 attached to the outer elastic body portion 41, and is attached to the inner peripheral surface 211 of the tubular portion 21. The elastic body of the outer elastic body portion 41 is, for example, a rubber material such as fluororubber, acrylic rubber, nitrile rubber, or hydrogenated nitrile rubber. The outer reinforcement portion 42 is made of metal, for example, and is manufactured by press working or forging, and the outer elastic body portion 41 is molded through cross-linking (vulcanization) molding using a molding die. The outer elastic body portion 41 is formed integrally with the outer reinforcement portion 42.

The outer elastic body portion 41 includes an annular portion 411 formed in an annular shape around the axis x, and the grease lip 412 and the side lip 413 as the outer lip portion protruding from an inner peripheral side end portion of the annular portion 411. An end edge of the annular portion 411 on the outer peripheral side is in contact with the inner peripheral surface 211 of the tubular portion 21, so that the sealing performance between the tubular portion 21 and the outer reinforcement portion 42 is secured.

The grease lip 412 protrudes toward the inner peripheral side, is inclined toward the other side in the axis x direction as the grease lip 412 goes toward the inner peripheral side, and is in sliding contact with the outer peripheral surface 311 of the columnar portion 31. The side lip 413 protrudes toward the one side in the axis x direction, is inclined toward the outer peripheral side as the side lip 413 goes toward the one side in the axis x direction, and is in sliding contact with the surface 322 of the flange portion 32 facing the other side in the axis x direction. The side lip 413 is provided closer to the atmosphere side than the grease lip 412, and suppresses the entry of foreign matters such as muddy water into a portion between the grease lip 412 and the columnar portion 31. In addition, in the present embodiment, one side lip 413 is provided.

The outer reinforcement portion 42 integrally includes a tubular portion 421 having a cylindrical shape extending along the axis x direction, and an annular portion 422 that is continuous with an end portion of the tubular portion 421 on the one side in the axis x direction and extends toward the inner peripheral side. The outer elastic body portion 41 is provided to cover a surface of the annular portion 422 on one side in the axis x direction.

The inner seal member 5 includes an inner elastic body portion 51, and an inner reinforcement portion 52 attached to the inner elastic body portion 51, and is attached to the recess portion 321 of the inner peripheral side member 3. A method of attaching the inner seal member 5 to the recess portion 321 is not particularly limited, and the inner seal member 5 may be attached by, for example, metal fitting. The elastic body of the inner elastic body portion 51 is, for example, a rubber material such as fluororubber, acrylic rubber, nitrile rubber, or hydrogenated nitrile rubber. The inner reinforcement portion 52 is made of metal, for example, and is manufactured by press working or forging, and the inner elastic body portion 51 is molded through cross-linking (vulcanization) molding using a molding die. The inner elastic body portion 51 is formed integrally with the inner reinforcement portion 52.

The inner elastic body portion 51 includes an attachment portion 511 disposed in the recess portion 321, and the inner lip portion 512 protruding from the attachment portion 511 toward the other side in the axis x direction. In the attachment portion 511 having a substantially rectangular cross section, an outer peripheral surface portion 511A is exposed without being covered with the inner reinforcement portion 52, and the outer peripheral surface portion 511A is in contact with the inner peripheral surface of the recess portion 321. In addition, the outer peripheral surface portion 511A is inclined toward the outer peripheral side as the outer peripheral surface portion 511A goes toward the other side in the axis x direction (such that the dimension in the radial direction is decreased as the outer peripheral surface portion goes toward the bottom portion of the recess portion 321), and has a protrusion portion 511B at the end portion on the other side in the axis x direction.

The inner lip portion 512 is inclined toward the outer peripheral side as the inner lip portion 512 goes toward the other side in the axis x direction (that is, as the inner lip portion 512 goes toward the outer peripheral side member 2), and a base end portion 512B is formed thinner (the dimension in the radial direction is smaller) than a distal end portion 512A. That is, the distal end portion 512A is heavier and has higher rigidity than the base end portion 512B, and the base end portion 512B is more easily deformed than the distal end portion 512A.

The distal end portion 512A is in sliding contact with the end face 212 of the tubular portion 21 on one side in the axis x direction, so that the inner lip portion 512 is in linear contact with the outer peripheral side member 2. In addition, the end face 212 has a planar shape along a plane orthogonal to the axis x direction, and the inner lip portion 512 is in sliding contact with such a planar portion.

The grease lip 412 and the side lip 413 as the outer lip portion are provided on the sealing target space side with respect to the inner lip portion 512. That is, the inner lip portion 512 suppresses the entry of foreign matters such as muddy water into a portion between the grease lip 412 and the side lip 413 and the inner peripheral side member 3. In addition, the inner lip portion 512 is provided on the outer peripheral side with respect to the grease lip 412 and the side lip 413.

The inner reinforcement portion 52 integrally includes a tubular portion 521 having a cylindrical shape extending along the axis x direction, and an annular portion 522 that is continuous with an end portion of the tubular portion 521 on the one side in the axis x direction and extends toward the outer peripheral side, and is formed to have an L-shaped cross section. The inner reinforcement portion 52 covers the inner peripheral surface of the attachment portion 511 having a substantially rectangular cross section and a part of a surface on one side in the axis x direction. At least on the other side in the axis x direction, the total dimension of the attachment portion 511 and the inner reinforcement portion 52 in the radial direction is equal to or slightly larger than the dimension of the recess portion 321 in the radial direction, the attachment portion 511 is in close contact with the inner surface of the recess portion 321, and the sealing performance is secured.

In the sealing structure 1A as described above, when foreign matters such as muddy water try to enter from the atmosphere side toward the sealing target space side, the entry is first suppressed by the inner lip portion 512. When foreign matters pass through the inner lip portion 512, next, the entry is suppressed by the side lip 413. At this time, since the inner lip portion 512 and the side lip 413 are alternately provided (extend from the inner peripheral side member 3 and the outer peripheral side member 2, respectively), the foreign matters passing through the inner lip portion 512 pass through the vicinity of the distal end of the inner lip portion 512, and easily reach the vicinity of the base end of the side lip 413. That is, the foreign matters having passed through the inner lip portion 512 hardly pass through the side lip 413.

As described above, the entry of foreign matters to the grease lip 412 is suppressed, and generation of rust due to the foreign matters and wear of each lip due to the rust are suppressed. In addition, it is possible to suppress a decrease in sealing performance due to the rust or wear, and an increase in torque for rotating the wheel (hereinafter, simply referred to as "torque" in some cases) due to an increase in frictional force.

In addition, when the inner peripheral side member 3 is rotated, the inner lip portion 512 inclined toward the outer peripheral side tends to further move toward the outer peripheral side by the centrifugal force generated by the rotation. As a result, the force with which the inner lip portion 512 presses the outer peripheral side member 2 is reduced, and the torque for rotating the wheel is reduced.

As described above, with the sealing structure 1A according to the first embodiment of the present invention, since the inner seal member 5 is attached to the recess portion 321 of the inner peripheral side member 3, it is not necessary to provide a slinger for the attachment of the inner seal member 5 or extend the slinger, and it is possible to suppress complication of a configuration. In this way, the inner seal member 5 can be easily provided, and the sealing performance can be improved as compared with a configuration in which sealing is achieved only by the seal provided on the outer peripheral side member 2.

In addition, by providing the inner seal member 5, the number of seals in the outer seal member 4 can be reduced, and the torque can be easily reduced using the centrifugal force in the rotating inner seal member 5. Therefore, as compared with the configuration in which seals are provided only on the outer peripheral side member 2, the total torque can be reduced even when the total number of seals is the same.

In addition, since the inner lip portion 512 extends toward the outer peripheral side as approaching the outer peripheral side member 2 in the axis x direction, the inner lip portion 512 can be deformed by the centrifugal force to reduce torque.

Furthermore, since the base end portion 512B is more easily deformed than the distal end portion 512A in the inner lip portion 512, deformation using the centrifugal force is likely to occur as described above, and torque can be more easily reduced.

In addition, since the inner seal member 5 has the inner reinforcement portion 52, deformation of the inner elastic body portion 51 can be suppressed. At this time, the outer peripheral surface portion 511A of the inner elastic body portion 51 is in contact with the inner surface of the recess portion 321, so that the sealing performance therebetween can be improved. In particular, since the protrusion portion 511B is formed on the outer peripheral surface portion 511A, the protrusion portion 511B is easily pressed against the recess portion 321.

### [Second Embodiment]

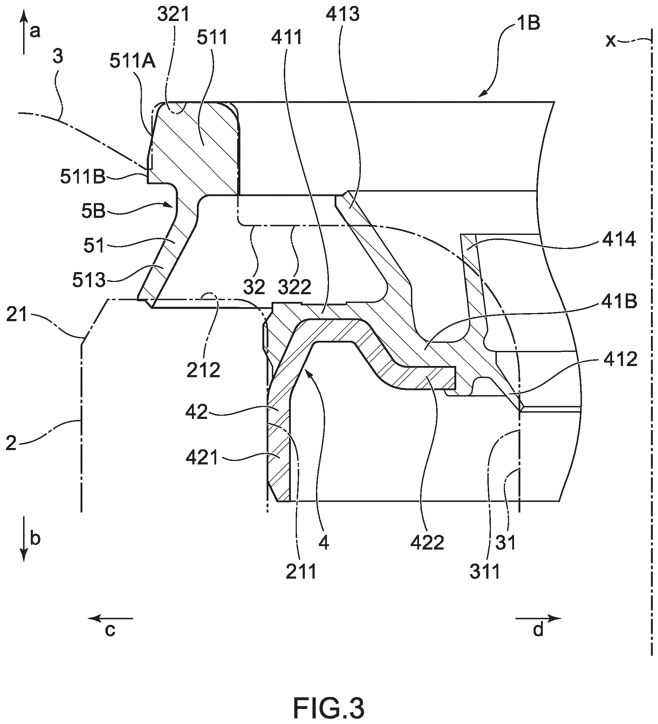

As illustrated in Fig. 3, in a sealing structure 1B of the present embodiment, an inner seal member 5B and an outer elastic body portion 41B of the outer seal member 4 are different from the sealing structure 1A of the first embodiment, and other structures are similar.

The inner seal member 5B does not have an inner reinforcement portion, and the inner peripheral surface, the outer peripheral surface, and the surface on one side in the axis x direction of the attachment portion 511 are in contact with the inner surface of the recess portion 321. In addition, an inner lip portion 513 of the inner seal member 5B has a substantially constant thickness, and the ease of deformation from the base end portion to the distal end portion is substantially the same.

The outer elastic body portion 41B has, in addition to the grease lip 412 and the side lip 413, an intermediate lip 414 disposed between the grease lip 412 and the side lip 413. The intermediate lip 414 is in sliding contact with a transition region between the columnar portion 31 and the flange portion 32.

With the sealing structure 1B of the present embodiment, similarly to the sealing structure 1A of the first embodiment, it is possible to improve the sealing performance while suppressing the complexity of a configuration.

### [Third Embodiment]

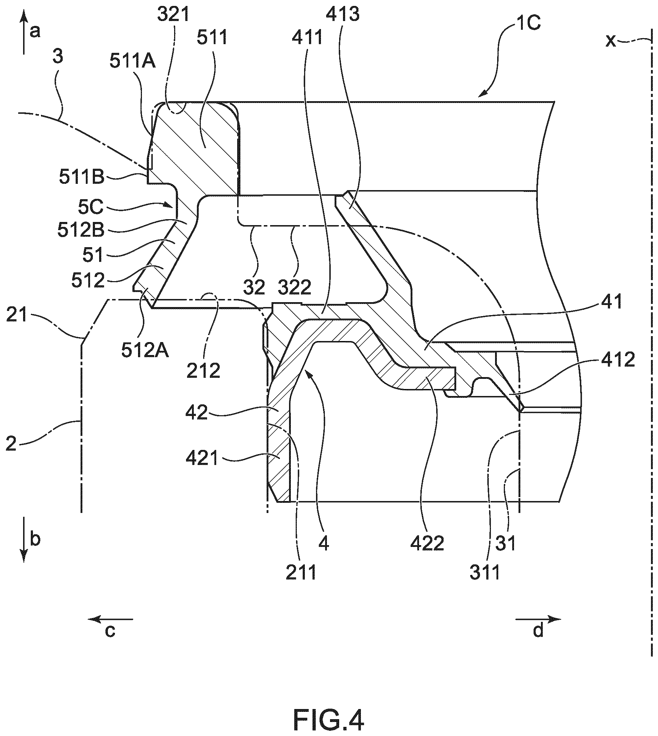

As illustrated in Fig. 4, in a sealing structure 1C of the present embodiment, an inner seal member 5C is different from the sealing structure 1A of the first embodiment, and other structures are similar.

Similarly to the inner seal member 5B in the second embodiment, the inner seal member 5C does not have an inner reinforcement portion but has the attachment portion 511 having the same form. In addition, the inner seal member 5C has the inner lip portion 512 similar to that of the first embodiment.

With the sealing structure 1C of the present embodiment, similarly to the sealing structure 1A of the first embodiment, it is possible to improve the sealing performance while suppressing the complexity of a configuration.

### [Fourth Embodiment]

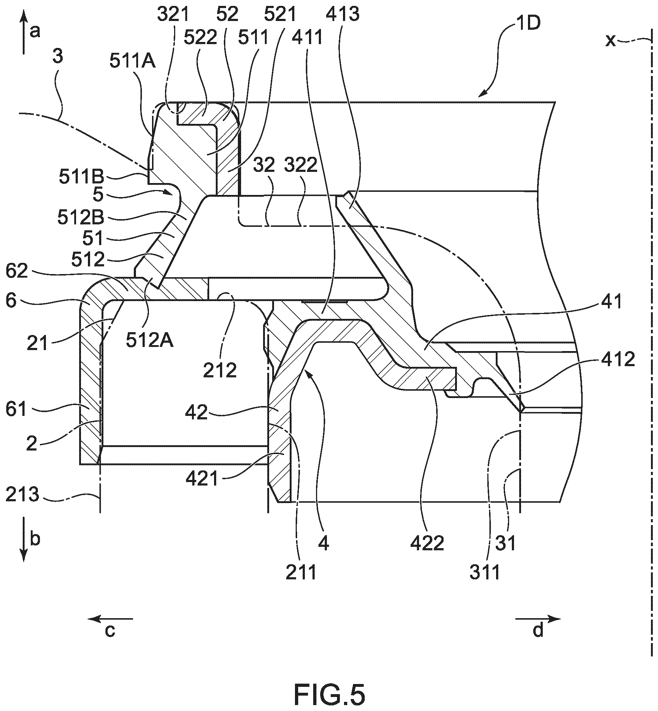

As illustrated in Fig. 5, a sealing structure 1D of the present embodiment is different from the sealing structure 1A of the first embodiment in that a slinger 6 is provided, and other structures are similar.

The slinger 6 integrally includes a tubular portion 61 having a cylindrical shape extending along the axis x direction, and an annular portion 62 that is continuous with an end portion of the tubular portion 61 on the one side in the axis x direction and extends toward the inner peripheral side, and is formed to have an L-shaped cross section. The slinger 6 is attached to the outer peripheral side member 2 such that the tubular portion 61 covers an outer peripheral surface 213 of the tubular portion 21 and the annular portion 62 covers the end face 212 of the tubular portion 21 on one side in the axis x direction. The inner lip portion 512 is not in direct sliding contact with the outer peripheral side member 2 but is in sliding contact with the slinger 6 as a target object attached to the outer peripheral side member 2. Note that an elastic member for sealing is preferably provided between the slinger 6 and the tubular portion 21.

With the sealing structure 1D of the present embodiment, similarly to the sealing structure 1A of the first embodiment, it is possible to improve the sealing performance while suppressing the complexity of a configuration.

Furthermore, since the slinger 6 is provided, the surface state (smoothness, surface roughness, and the like) of the sliding contact surface can be easily managed as compared with the configuration in which the inner lip portion 512 is in direct sliding contact with the outer peripheral side member 2.

### [Fifth Embodiment]

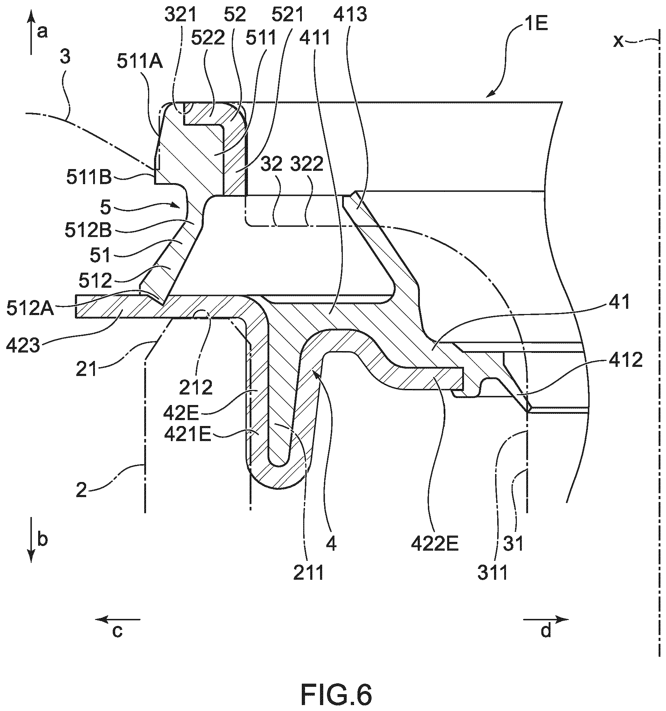

As illustrated in Fig. 6, in a sealing structure 1E of the present embodiment, an outer reinforcement portion 42E of the outer seal member 4 is different from the sealing structure 1A of the first embodiment, and other structures are similar.

The outer reinforcement portion 42E integrally includes a double tubular portion 421E extending along the axis x direction, an annular portion 422E that is continuous with the end portion of the double tubular portion 421E on the one side in the axis x direction and extends toward the inner peripheral side, and a slinger 423 that is continuous with the end portion of the double tubular portion 421E on the one side in the axis x direction and extends toward the outer peripheral side. The double tubular portion 421E extends in a cylindrical shape from one side toward the other side in the axis x direction along the inner peripheral surface 211 of the tubular portion 21, and then is folded back toward the inner peripheral side to extend in a cylindrical shape toward the other side.

The slinger 423 covers the end face 212 of the tubular portion 21 on one side in the axis x direction. The inner lip portion 512 is not in direct sliding contact with the outer peripheral side member 2 but is in sliding contact with the slinger 423 as a target object attached to the outer peripheral side member 2. Note that an elastic member that seals a portion between the outer reinforcement portion 42E and the tubular portion 21 is preferably provided, for example, between the slinger 423 and the tubular portion 21.

With the sealing structure 1E of the present embodiment, similarly to the sealing structure 1A of the first embodiment, it is possible to improve the sealing performance while suppressing the complexity of a configuration.

Furthermore, since the slinger 423 is provided, similarly to the fourth embodiment, it is possible to easily manage the surface state such as the smoothness and the surface roughness of the sliding contact surface. In addition, since the slinger 423 is integrally formed with the outer reinforcement portion 42E, an increase in the number of components can be suppressed.

Note that the present invention is not limited to the above-described embodiments, and includes other configurations and the like that can achieve the object of the present invention, and the following modifications and the like are also included in the present invention. For example, in the above-described embodiments, the inner lip portions 512 and 513 extend toward the outer peripheral side as approaching the outer peripheral side member 2 in the axis x direction, but the inner lip portion may extend along the axis x direction or may extend toward the inner peripheral side as approaching the outer peripheral side member in the axis x direction. In a case where the inner lip portion extends toward the inner peripheral side, the inner lip portion can be pressed against a sliding contact target using the centrifugal force, and the sealing performance can be improved.

In addition, in the above-described embodiments, the grease lip 412 and the side lip 413 as the outer lip portion are in direct sliding contact with the inner peripheral side member 3, but the outer lip may be configured to be in sliding contact with a target object (for example, a slinger) attached to the inner peripheral side member.

In addition, the configurations described in the first to fifth embodiments can be combined with each other. For example, the configuration in which the inner reinforcement portion is not provided as in the second and third embodiments and the configuration in which the slinger is provided as in the fourth and fifth embodiments may be combined.

The embodiments of the present invention have been described above, but the present invention is not limited to the sealing structures according to the embodiments of the present invention, and includes all aspects included in the concept and claims of the present invention. In addition, each configuration may be appropriately and selectively combined to achieve at least a part of the above-described problems and effects. For example, the shape, material, arrangement, size, and the like of each constituent element in the embodiments described above can be appropriately changed according to a specific usage aspect of the present invention.

### List of Reference Signs

1A to 1E sealing structure
2 outer peripheral side member
21 tubular portion
211 inner peripheral surface
212 end face
213 outer peripheral surface
3 inner peripheral side member
31 columnar portion
311 outer peripheral surface
32 flange portion
321 recess portion
4 outer seal member
41 outer elastic body portion
411 annular portion
412 grease lip
413 side lip
414 intermediate lip
42, 42E outer reinforcement portion
421 tubular portion
421E double tubular portion
422, 422E annular portion
5, 5B, 5C inner seal member
51 inner elastic body portion
511 attachment portion
511A outer peripheral surface portion
511B protrusion portion
512, 513 inner lip portion
512A distal end portion
512B base end portion
52 inner reinforcement portion
521 tubular portion
522 annular portion
6, 423 slinger
61 tubular portion
62 annular portion

## Claims

1. A sealing structure for achieving sealing between an outer peripheral side member and an inner peripheral side member which are relatively rotatable and between which a rolling element is provided, the sealing structure comprising:
an outer seal member that is attached to the outer peripheral side member and has an outer lip portion that is in sliding contact with the inner peripheral side member or a target object attached to the inner peripheral side member; and
an inner seal member that is attached to the inner peripheral side member, and has an inner lip portion that is in sliding contact with the outer peripheral side member or a target object attached to the outer peripheral side member, wherein
the outer lip portion is provided closer to a sealing target space than the inner lip portion, and
the inner seal member is attached to a recess portion formed in the inner peripheral side member.

2. The sealing structure according to claim 1, wherein
the inner peripheral side member is rotatable about a predetermined axis, and
the inner lip portion is inclined to extend toward an outer peripheral side as approaching the outer peripheral side member in an axis direction.

3. The sealing structure according to claim 2, wherein the inner lip portion is formed such that a base end portion is more easily deformed than a distal end portion.

4. The sealing structure according to any one of claims 1 to 3, wherein
the inner seal member includes an inner elastic body portion including the inner lip portion, and an inner reinforcement portion attached to the inner elastic body portion,
the inner reinforcement portion covers the inner elastic body portion from at least an inner peripheral side, and
the inner elastic body portion includes an outer peripheral surface portion in contact with an inner surface of the recess portion.

5. The sealing structure according to any one of claims 1 to 3, wherein a slinger with which the inner lip portion is in sliding contact is attached to the outer peripheral side member.

6. The sealing structure according to claim 5, wherein
the outer seal member includes an outer elastic body portion including the outer lip portion, and an outer reinforcement portion attached to the outer elastic body portion, and
the slinger is integrally formed with the outer reinforcement portion.
